# EUROPEAN PATENT SPECIFICATION

(11) **EP 0 845 605 B1**
(45) Date of publication and mention of the grant of the patent: **04.10.2001**
(21) Application number: 97926260.7
(22) Date of filing: 16.06.1997
(51) Int. Cl.: F16B 13/10, F16B 13/00, F16B 13/12

(54) **SELF-DRILLING ANCHOR**
SELBSTBOHRENDER ANKERBOLZEN
BOULON D'ANCRAGE AUTOPERCEUR

(30) Priority: 19.06.1996 JP 17992396
(43) Date of publication of application: 03.06.1998
(73) Proprietor: Yamahiro Co., Ltd, Kawachinagano-shi, Osaka 586 (JP)
(72) Inventor: YAMAMOTO, Hisayoshi, Yamahiro Co., Ltd., Osaka 586 (JP); SATO, Takayuki, Yamahiro Co., Ltd., Osaka 586 (JP)
(74) Representative: Lyndon-Stanford, Edward Willoughby Brooke
(86) International application number: PCT/JP97/02072
(87) International publication number: WO 97/48911

(56) References cited:
- CH-A- 429 089
- DE-A- 2 533 162
- DE-A- 4 203 949
- GB-A- 790 483
- JP-A- 6 213 219
- JP-A- 58 013 215
- JP-B- 48 027 855
- JP-U- 58 065 416
- JP-U- 59 183 513
- JP-U- 61 001 709
- US-A- 3 715 952
- US-A- 4 157 677

## Description

### TECHNICAL FIELD

The present invention relates to a self-drilling anchor comprising a shank whose proximal end can be engaged with a rotary member of a tool, a slit being formed in the distal end portion of the shank and extending from its distal end tip, for receiving a drilling bit which has cutting edges formed on its distal end portion, whereby said drilling bit can drill a starting hole into a structure by the rotation of the anchor. Such an anchor is used in mounting and securing various types of fixtures such as metal fittings onto structures such as concrete, bricks or blocks, etc.

### BACKGROUND ART

One method of mounting and securing various types of fixtures such as metal fittings onto structures such as concrete, bricks or blocks, etc., involves driving in anchor bolts or anchor pins before the cure of concrete, post-anchoring to be performed after the cure of concrete, and driving in pins under the influence of powders. The present invention relates to anchoring after the structure is set or formed.

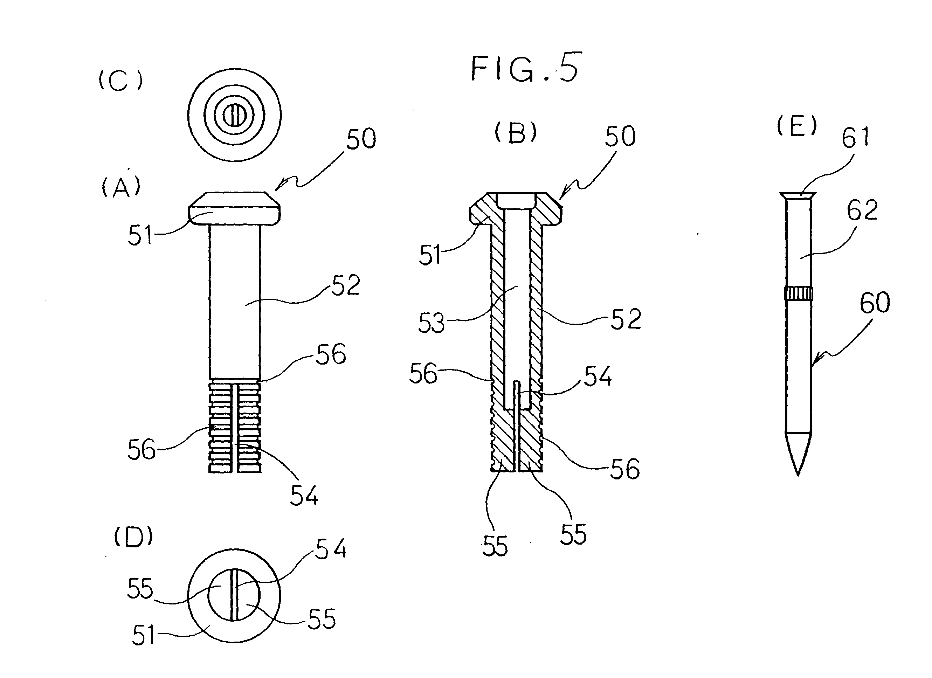

An example of such post-performance anchoring includes the steps of drilling a starting hole to a predetermined depth by the use of concrete drills having a prescribed diameter, then driving in an anchor pin, and spreading the distal end portions of the anchor pin wider than the inner diameter of the staring hole for retention against draw, and another process of inserting adhesives and an anchor into a starting hole so as to enable the adhesives to protect the anchor against any draw force for retention. In one specific arrangement, fig. 5 shows a conventional anchor pin; fig. 5(A) is a front view, fig. 5(B) a central longitudinal section view, fig. 5(C) a plan view, fig. 5(D) a bottom plan view, and fig. 5(E) a front view of the pin.

This particular anchor pin consists of a body 50 and a pin 60. The body 50 is composed of a head 51 provided on the proximal end, and a shank 52 extending from said head 51 distally, the outer diameter of the head 51 being larger than that of the shank 52. The outer diameter of shank 52 is substantially constant in size throughout its entire length.

An opening portion 53 for receiving a pin 60 is formed in the head 51, and the center of the shank 52 to extend from the proximal end to the distal end. The inner diameter of the opening portion 53 has a larger section formed to receive the head 61 of the pin 60 and another section formed constant in size for receiving the shank 62 of the pin 60.

The lower end portion of the shank 52 is formed with a constant length of slit 54 so that it may divide the distal end tip of the shank 52 into two (fig. 5(D)). The slit 54 extends from the distal end tip of the shank 52 to the opening portion 53.

A plurality of annular grooves 56 are formed in the outer periphery of the distal end portion of the shank 52.

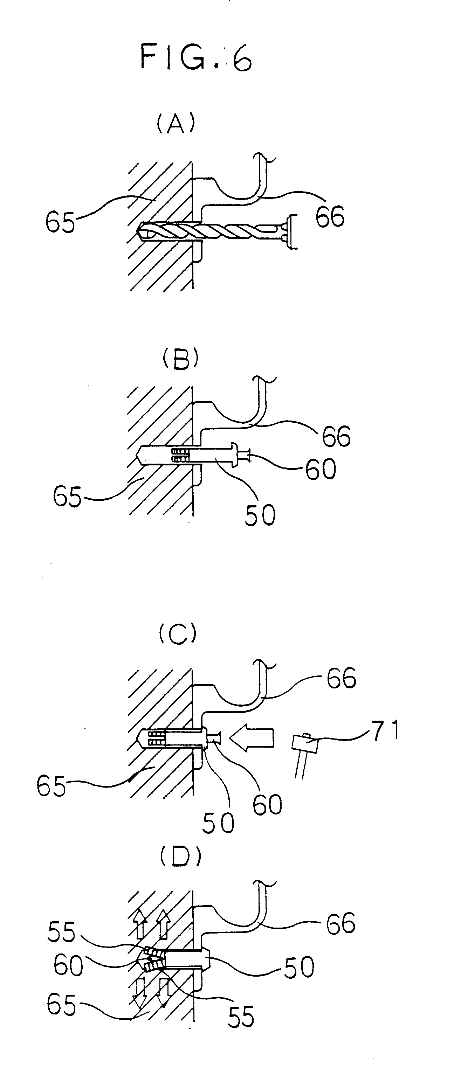

The pin 60 which is to be fitted into the opening portion 53 of the body 50 is constituted by a head 61 of larger diameter disposed on the proximal end portion and a shank 62 of a constant outer diameter extending distally, the shank 62 having a tapered lower end portion in the shape of a pointed needle. When this pin 60 is fitted into the opening portion 53 of the body 50 and driven by a hammer etc., the slit-forked distal end portions 55, 55 of the body 50 are spread to securely fit the anchor to a structure with a subsequent fixation of a fixture on the structure. Fig. 6 is a schematic illustration showing an example of the use of such an anchor pin. The procedure is as follows:

As illustrated by fig. 6(A), a starting hole is drilled using an electric drill through metal fittings 66 to be secured to a structure 65 such as concrete etc.

Referring to fig. 6(B), the anchor pin with the pin 60 fit into the opening portion of the body 50 is placed in said starting hole.

In fig. 6(C), the pin 60 is driven by a hammer 71.

In fig. 6(D), the driven pin 60 may induce the spreading of the slit-forked distal end portions 55, 55 so that the anchor will be secured to the structure 65, and so will be the metal fittings 66.

In additional to said anchor pin, the anchor also involves an anchor bolt having not a head 51 but a single shank 52 and threads formed in the latter on the outer periphery of the upper end portion. With this anchor bolt, after it has been secured to a structure, a fixture can be securely fixed to the structure by a nut etc.

US 4 157 677 discloses a self drilling dowel having a blind bore in which a spreader is contained prior to drilling.

The drill head of the dowel is formed on the leading end of the dowel extending across it to provide the central blind bore.

This entire dowel is made from one material and thus the whole of the shank must be of drilling grade material.

DE 790,483 discloses a rock anchor for connecting layers of rock, specifically in mining operations. The desired use is to reinforce loose rock following mining operations and the anchor is typically 1.5 metres to 2.5 metres in length. The anchor consists of a shank containing transverse bores which allow a concentric bore to be filled with concrete or grout to cast in the anchor, after either the drill head, or a sleeve which is concentric to the shank and external to it, has been spread, and fill the space around the shank which is of smaller diameter than the drilling bit, which is part of the shank. The concentric bore also serves to exhaust the rock dust.

CH 429089 discloses a self-drilling anchor which has a slit in the distal end portion of the shank to assist spreading of the shank when the pin is driven home. However, the shank is cylindrical and its end acts as a drill, requiring the whole of the shank to be of drilling grade material and also leading to difficulty with the core of concrete etc. which remains within the interior of the cylindrical shank.

On the other hand, US 3,715,52 discloses a self-drilling anchor of the type disclosed in the first paragraph above. The core is solid until the drilling end, where slits are provided for receiving the drilling bit and also for spreading.

The conventional anchor requires drilling of starting holes by means of an electric drill such as a concrete drill and adjustment so as to secure exact positional correspondence between the fixture and the structure, which may make the operation complicated, requiring trouble and time, and skill as well.

The task of the present invention is to provide an anchor which can drill a starting hole into a concrete structure and a fixture and secure the fixture to the structure. In other words, the task of this invention is to provide a self-drilling anchor wherein anchoring and drilling of holes in fixtures and structures and securing of the fixtures to the latter will be surely and efficiently executed.

### DISCLOSURE OF INVENTION

In accordance with the present invention, an opening portion is formed in the core of the shank extending from the proximal end portion of the shank toward the distal end portion of the shank by a length sufficient to receive a spreader pin, and the slit extends from said distal end tip at least to said opening portion, whereby the self-drilling anchor may be securely fixed to a structure by fitting the spreader pin into the opening portion and driving the spreader pin until the slit is spread, a cut-out is formed in the proximal end portion of the drilling bit to extend from its approximately central portion towards the proximal end of the drilling bit, and the drilling bit is received in the slit with the cut-out radially internally of the slit, whereby the distal end portion of the spreader pin may intrude into the cut-out.

In accordance with the invention, because of the drilling bits 20, 25, 31 disposed in the distal end portion of the shank 12, a starting hole may be drilled by driving the anchor using an electric rotary tool into a fixture placed in position in the structure, and then the spreader pin 1 fitted in the opening portion 15 in the core of the shank 12 is so driven as to urge the slit 16 mounted in the distal end portion of the shank 12, namely the distal end portion of the shank 12 to spread until the anchor is securely fixed to the structure.

This also makes it possible to allow the drilling bits 20, 31 received by the slit 16 of the distal end portion of the shank 12 to efficiently drill starting holes into the fixtures and structures, thereby enabling proper pin drive without any difficulty due to the existence of the cut-out 23 on the drilling bits 20, 31.

Since the cut-out 23 is placed within the slit 16, there will be no risk of drilling bits 20, 31 being broken down by the distal end portion of the shank 12, such that the strength of the drilling bits may be sufficiently maintained.

### BRIEF DESCRIPTION OF DRAWINGS

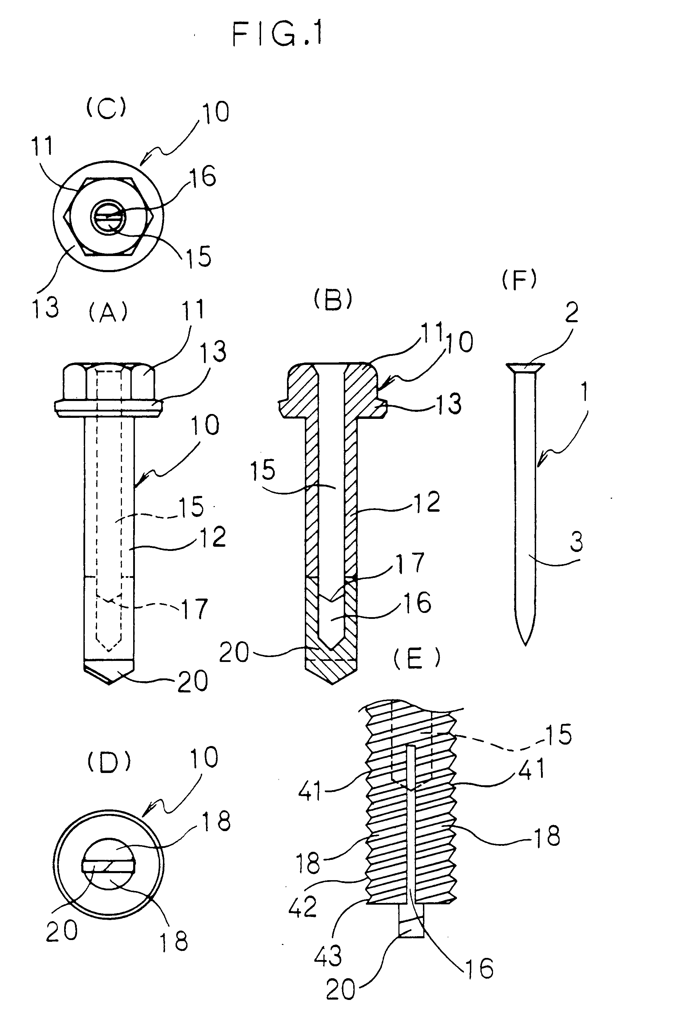

Fig. 1 shows one embodiment of the self-drilling anchor in accordance with the present invention; (A) is a front view of the body of the anchor, (B) a central longitudinal section view of the body, (C) a plan view of the body, (D) a bottom plan view of the body, (E) an enlarged side view of the distal end portion of the body, and (F) a front view of a spreader pin.

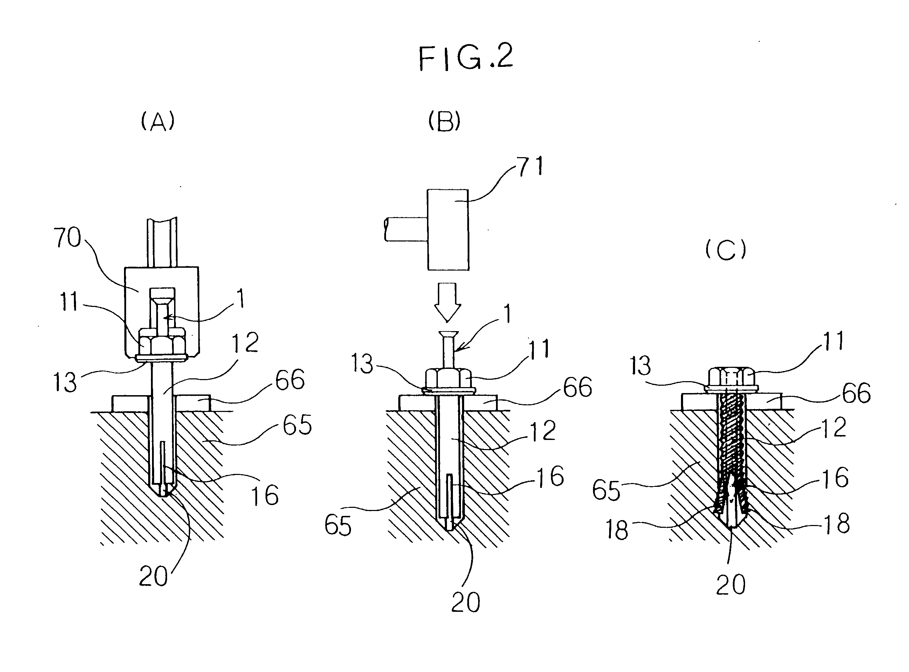

Fig. 2 is a schematic illustration of an example of use of the self-drilling anchor of fig. 1; (A) illustrates the drilling state in which a self-drilling anchor is being driven, (B) the state in which the drilling operation has been completed, and (C) the state in which the anchor has been fixed by driving the spreader pin.

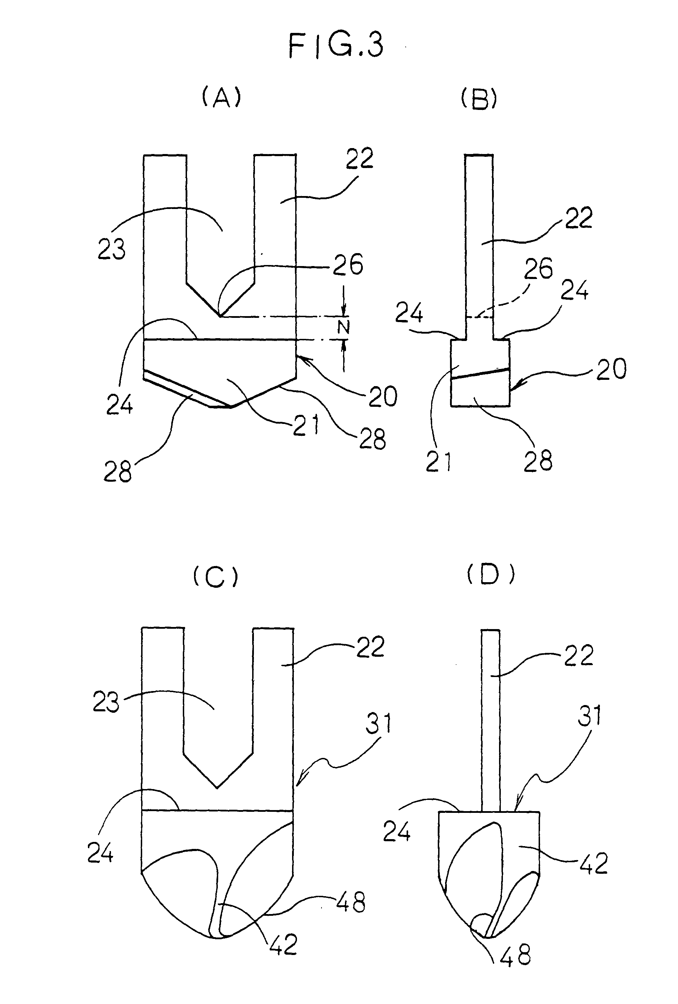

Fig. 3 shows another embodiment of the drilling bit in accordance with the present invention; (A) is a front view of a plate-like drilling bit for use in the embodiment as shown by fig. 1, (B) a side view of same, (C) a front view of the drilling bit of other embodiment, and (D) a side view of the same.

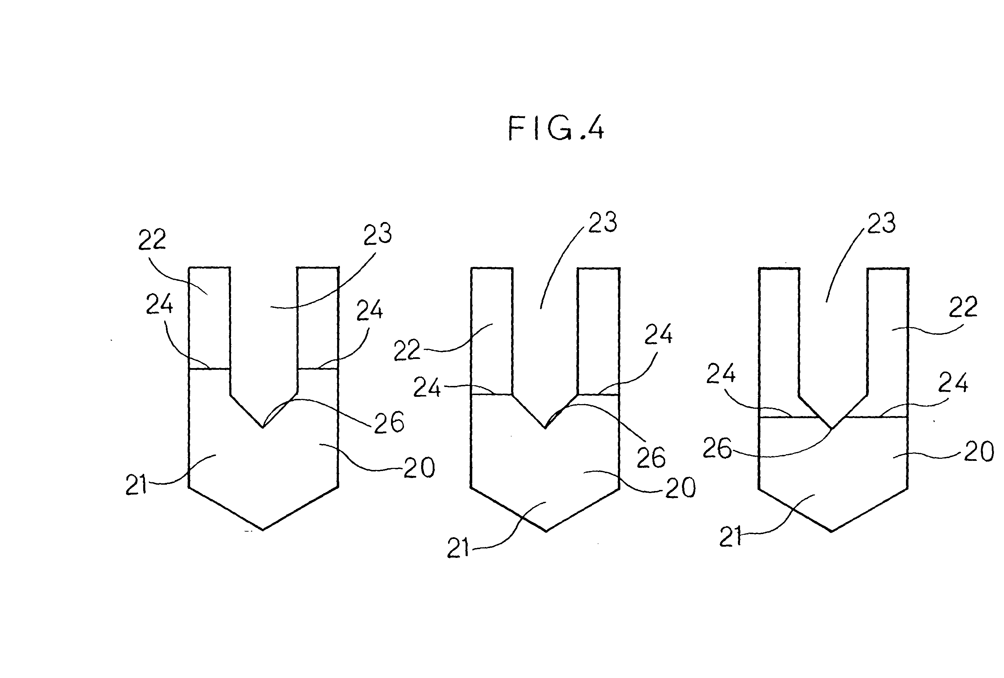

Fig. 4 is a front view showing three other variations of the drilling bit of the same configuration as in fig. 3 (A) and (B).

Fig. 5 shows an conventional anchor pin; (A) is a plan view, (B) a central longitudinal section view, (C) a plan view, (D) a bottom plan view, and (E) a front view of an anchor pin.

Fig. 6 is a schematic illustration of an example of use of the conventional anchor pin as shown by fig. 5; (A) shows the state in which a starting hole is being drilled into a fixture and a structure by an electric drill, (B) the state in which the anchor pin is set in the starting hole, (C) the state in which the anchor pin is driven, and (D) the state in which the anchor has been securely fixed to the structure and so has been the fixture.

### BEST MODE FOR CARRYING OUT THE INVENTION

Now the embodiments of the present invention will be described with reference to the accompanying drawings. Figs. 1 to 4 illustrate the embodiments of the present invention.

Fig. 1 depicts one embodiment of the self-drilling anchor in accordance with the present invention; (A) is a front view of a body 10 of the anchor, (B) a central longitudinal section view of the body 10, (C) a plan view of the body 10, (D) a bottom plan view of the body 10, (E) an enlarged side view of a distal end portion of the body 10, and (F) a front view of a spreader pin 1.

This specific self-drilling anchor comprises body 10 and spreader pin 1. The body 10 is composed of a head 11 formed on the proximal end portion and a shank 12 extending from said head 11 distally, the shank 12 having a drilling bit 20 on its distal end.

The head 11 is similar in shape to the head of a hexagonal bolt, being hexagonal in its sectional contour which can be engaged with the rotary member of an electric rotary tool, with its seating face formed with a flange 13 having a larger diameter than that of head 11. This flange 13 is useful in subjecting a fixture to pressure for fixing purpose.

The shank 12 has a columnar shape having a constant outer diameter, and is formed with helical groove portion 41 or channel portion on its outer periphery. The helical groove portion 41 or channel portion acts as an engagement member when the distal end portion of shank 12 is spread to be securely fixed to a structure. Specifically, in fig. 1(E), the helical groove portion 41 comprises a leading flank 42 and a trailing flank 43. The leading flank 42 is inclined at an acute angle to the axial core, while the trailing flank 43 is inclined at an obtuse angle to the axial core. Thus, when the distal end portions 18, 18 of the shank have been spread, the face of the trailing flank 43 will become substantially horizontal for effective engagement with the structure. The groove portion 41 is not shown in the other drawings for the sake of brevity.

The helical groove portion 41 or channel portion as formed on the outer periphery of the shank 12 may additionally act as means to effectively evacuate chips etc., from a structure to which the self-drilling anchor is secured. Said helical groove portion 41 may have a leading angle larger than that of ordinary screws for the purpose of evacuation of chips etc. The helical groove portion is arranged such that it may extend to the proximal end portion of the shank 12.

The outer diameter of the shank 12 may be made smaller than the lateral width of the drilling bit 20, to perform effective discharge of chips.

The body 10 includes in its axial core an opening portion 15 formed constant in inner diameter and extending from the proximal end of the head portion 11 to a position short of the distal end of the shank 12. Numeral 17 represents a distal end portion of the hole portion 15 in fig. 1. The distal end portion 17 is made so pointed as to guide the tip of a spreader pin 1. The proximal end of opening portion 15 is a little larger in its inner diameter to appropriately adapt to the head 2 of spreader pin 1.

There is provided in the lower end portion of the shank 12 a slit 16 which may divide the lower end portion into two, namely in the plane including the center of the shank 12. The slit 16 is formed in such a manner that it will reach a portion of said opening portion 15.

The drilling bit for use in drilling a fixture or a structure such as concrete is fitted into part of the slit 16, for retention by the latter.

For purposes of retention, the drilling bit 20 may be brazed. In short, all that the drilling bit 20 has to be is securely fixed to a certain part of the slit 16 by any possible means. Of course, the drilling bit 20 may only be forced into the slit 16. If the drilling bit 20 is subjected to brazing, the brazing strength is not so strong that the distal ends 18, 18 of the shank 12 is not difficult to spread.

The spreader pin 1 comprises head 2 formed on the proximal end portion and a shank 3 extending distally from the head 2. The head 2 is made larger than the shank 3 in outer diameter, while the shank 3 is formed constant in its outer diameter with a pointed distal end.

A complete self-drilling anchor may be constituted by fitting the spreader pin 1 into the opening portion 15 of said body 10.

Fig. 2 is a schematic illustration of an example of actual use of said self-drilling anchor; (A) shows the state in which the self-drilling anchor is being driven, (B) the state in which the drilling operation has been completed, and (C) the state in which the anchor is in a fixed position with a spreader pin driven thereinside.

As shown in fig. 2(A), at first, a fixture 66 or an object to be fixed is placed on a structure 65 such as concrete. Then the self-drilling anchor is driven into the fixture 66. During the driving operation, an electric rotary tool is used. The driving operation comprises engaging the driver bit 70 of this tool with the head 11, and boring the structure 65 such as concrete, bricks, blocks, etc., and the fixture 66 as well, as the self-drilling anchor is rotated.

Such a rotary driving force may urge the drilling bit 20 equipped on the distal end of the shank 12 to drill a starting hole into the fixture 66 and the structure 65.

Referring to fig. 2(B), when the drilling of starting hole is accomplished, the surface of the fixture 66 will be subjected to pressure by the lower side of the flange 13 forming the seating face of the head 11. At this stage, the driver bit 70 of the electric rotary tool is removed from the anchor head portion 11. Then the head of the spreader pin 1 protruding upward from the axial core of the head 11 is struck with a hammer 71 to allow the spreader pin 1 to enter into the shank 12 of the anchor.

Referring to fig. 2(C), upon being forced into the head portion 11 and the shank 12 of the anchor, the spreader pin 1 is forcibly fitted in part into the slit 16 as formed in the distal end portion of the shank 12, thereby to allow the distal end portions 18, 18 of the shank 12 to spread respectively. The spread leading end portions 18, 18 may lead the self-drilling anchor into a permanent attachment with the structure, and simultaneously the fixture 66 is also securely fixed to the structure 65.

The groove portion formed on the outer periphery of the shank 12 is shown only if fig. 2(C) but not in the other drawings of fig. 2 for the sake of brevity.

Fig. 3 shows drilling bits of different shapes; (A) is a front view of the drilling bit 20 in accordance with the above mentioned embodiment, (B) a side view of same, (C) a front view of the drilling bit 31 in accordance with the other embodiment, and (D) a side view of same.

Referring to figs. 3 (A) and (B), the drilling bit 20 is plate-like and U-shaped as a whole in a front view, comprising a thick section 21 formed with a cutting edge 28 in the lower topped portion and a thin section 22 which is to fit in the slit 16 formed in the distal end portion of the shank 12.

The thin section 22 has a cut-out 23 of a suitable length extending from the substantial center portion of its proximal end portion distally. The lateral width of cut-out 23 is essentially equal to the inner diameter of the opening portion 15 opened in the shank 12 of the anchor, with its lower distal end portion of a pointed shape. This may facilitate the intrusion of the distal end portion of the spreader pin 1 into the slit 16.

In this embodiment, step portion 24 located in the boundary between the thick and thin sections 21, 22, viz, a site abutted by the distal end portion of the shank 12 of the anchor is formed in such a manner that it will be positioned by a length N below the lower distal end portion 26 of the cut-out 23. In this connection, a part of the cut-out 23 may be received by the slit 16 of the shank 12 of the anchor to such a degree that the drilling bit 20 may be prevented from breaking at the site of step 24.

Referring to figs. 3(C) and (D), a drilling bit 31 comprises a drilling portion 42 at the distal end side and a plate-like thin section 22 at the proximal end portion side. The drilling portion 42 is not a plate-like member but a tapered columnar member with a point, and has a cutting edge 48 extending from the distal leading end portion proximally.

Said thin section 22 of the proximal end portion side, which is intended to be received by the slit 16 for retention, has a cut-out 23 extending downward from the substantial center portion of its upper proximal end portion. The configuration of the thin portion 22 is similar to that of the counterpart as shown in figs. 3(A) and (B).

Therefore, with the anchor using this drilling bit 31, the shank 12 and the drilling bit 31 on its distal end are formed in separate units, but combination of the both members may take the shape of an ordinary self-drilling screw in its entirety.

Fig. 4 shows three other variations of a drilling bit that is similar in shape to the plate-like drilling bits 20 as shown in figs. 3(A) and (B). In these variations of drilling bits 20, step portions 24 which represents a boundary between the thin and thick sections 22, 21 are located above the proximal end portion 26 of the cut-out 23.

The three variations have a draw back in that the presence of the distal leading end portion 26 of the cut-out 23 under the step portion 24 due to the abutment of the distal end portion of the shank 12 of the anchor on the step portion 24 may cause damage to the drilling bit at the site of the step portion 24.

Consequently, for the purpose of the best embodiment of the drilling bit 20, it would be very desirable that the step portion 24 be positioned below the lower distal end portion 26 of the cut-out 23 as in said embodiment shown by figs. 3(A) and (B).

The distal end portion of the drilling bit 20 has a pointed shape in its center portion (fig. 3(A)), wherein two cutting edges 28 are arranged in the both sides of the pointed center portion.

The step portion 24, however, is not necessarily compulsory. In the absence thereof, there will be an arrangement such that the distal end portion of the slit 16 may abut on the proximal end portion of the drilling bit 20. However, if the slit 16 is made narrower, it will spread much wider when the spreader pin 1 has been driven, and thus, a narrower slit 16 is desirable. Such being the case, it would be preferable that only the part positioned at the proximal end portion side and received by the slit 16 of the shank 12 be made thinner, and that the lower leading end portion thicker, the strength of the drilling bit 20 being taken into account.

With the drilling bit 20, if there is provided a step portion 24 at the boundary between the thick section 21 of the lower distal end portion and the thin portion 22 of the upper proximal end portion, the end portion of the drilling bit 20 at the proximal end portion side may not abut on the distal end portion of the slit 16.

The flange 13 may not be provided on the seating face of the head 11.

The present invention may be embodied if head 11, engagement opening portion 34 on the base end portion of the shank 12, and the proximal end portion 36 of the shank 12 are of square or other different shapes rather than hexagonal shape in sectional contour.

The head 11 may be of disc or circular shape in contour, and a disc-shaped head or a circular head may be provided with an engagement opening portion having any of different contours, or a cross groove or slitting so that it will be properly engaged with the rotary member of the electric rotary tool. In that case, a head of any shape may be usable.

The length and outer diameter of the shank 12, the length and inner diameter of the opening portion 15, the length and cavity width of the slit 16, and the outer diameter and length of the spreader pin 1 may be freely designed.

The spreader pin with no head 2 is available for the present invention.

All that is important is to form a slit 16 so as to extend from the tip of the shank 12 to the opening portion 15, preferably with a predetermined length of part of the slit 16 being provided in a part of the opening portion 15.

The shape, thickness or size of drilling bits 20, 31 may be freely designed as needed, and as aforementioned, it is desirable that the distal end portion 26 of cut-out 23 be positioned proximally to the step portion 24.

As described above, the step portion 24 may not be provided in the drilling bit 20, but a part to be received by the slit 16 for retention is preferably made thinner, and the other part at the top end portion side thicker in order to form step portion 24 between the both parts, in consideration of the cavity width of the slit 16 or the strength of the drilling bit 20.

In the above mentioned embodiment, a single slit 16 is provided so as to divide its distal end portion into two at the tip of the shank and the plane including the center of the shank, but its distal end portion may also be divided into four or more than five, and besides, over two slits may be used.

A thread for tapping application may be formed in a part or the whole of the outer periphery of the anchor shank 12.

It is possible to form annular grooves or channels on the outer periphery of the anchor shank 12 as engagement members for providing an effective fixation to structures.

It is also possible to provide helical grooves or channels on the periphery of the anchor shank 12 for evacuating chips from the structures.

The outer diameter of shank 12 of the anchor may be made smaller than the width or outer diameter of the drilling bit to allow chips from the structure to go away easily.

The present invention composed of the above-described embodiments incorporates the following effects.

In the present invention, the provision of a drilling bit attached to the distal end of the anchor shank enables drilling a starting hole in the structure as well as the fixture by driving the anchor as it is afforded a turning effort by an electric rotary tool, thereby to avoid the necessity of opening a starting hole in advance in the fixture and structure using the electric rotary took as was commonly practised in the conventional anchoring operations.

Since a starting hole may be drilled into the structure together with the fixture, no adjustment for exact positional correspondence between the fixture and the structure is required in the anchoring operation.

Also, an effective drilling of a starting hole into the fixture and structure may be achieved by a drilling bit held by the slit, and no adjustment to secure exact positional correspondence between the fixture and the structure is needed.

Thus, the present invention may simplify the operation, need no skills, and contribute to cut the operation time short.

When a spreader pin is inserted after the hole drilling, the presence of a cut-out formed on the drilling bit may allow the spreader pin to intrude into the slit without any trouble.

Because the cut-out provided on the drilling bit is positioned within the slit of the shank, the strength of the drilling bit may be sufficiently guaranteed. This may eliminate the risk that the drilling bit is likely to be broken by the distal end portion of the shank.

As above-described, a great many effects may be achieved by the present invention.

## Claims

1. A self-drilling anchor comprising a shank (12) whose proximal end can be engaged with a rotary member of a tool, a slit (16) being formed in the distal end portion of the shank (12) and extending from its distal end tip, for receiving a drilling bit (20 or 31) which has cutting edges (28 or 48) formed on its distal end portion, whereby said drilling bit (20 or 31) can drill a starting hole into a structure by the rotation of the anchor, **characterized in that**;
an opening portion (15) is formed in the core of the shank (12) extending from the proximal end portion of the shank (12) toward the distal end portion of the shank (12) by a length sufficient to receive a spreader pin (1), and the slit (16) extends from said distal end tip at least to said opening portion (15), whereby the self-drilling anchor may be securely fixed to a structure by fitting the spreader pin (1) into the opening portion (15) and driving the spreader pin (1) until the slit (16) is spread;
a cut-out (23) is formed in the proximal end portion of the drilling bit (20 or 31) to extend from its approximately central portion towards the proximal end of the drilling bit (20 or 31); and
the drilling bit (20 or 31) is received in the slit (16) with the cut-out (23) radially internally of the slit (16), whereby the distal end portion of the spreader pin (1) may intrude into the cut-out (23).

2. A self-drilling anchor according to Claim 1, wherein said shank (12) is formed with a helical groove (41) to act as an engagement member when the slit (16) is spread.

3. A self-drilling anchor according to Claim 2, wherein said helical groove (41) comprises a leading flank (42) and a trailing flank (43) and wherein the face of the trailing flank (43) is substantially normal to the axis of the shank (12) when the slit (16) is spread.

## Patentansprüche

1. Selbstbohrender Anker, der einen Schaft (12) aufweist, in dessen proximales Ende ein Drehelement eines Werkzeugs eingreifen kann, wobei ein Schlitz (16) im distalen Endabschnitt des Schaftes (12) gebildet wird und von dessen distalem Vorderende ausgeht, um eine Bohrkrone (20 oder 31) aufzunehmen, auf deren distalem Endabschnitt Schneidkanten (28 oder 48) gebildet werden, wodurch die Bohrkrone (20 oder 31) durch die Drehung des Ankers eine Ausgangsbohrung in einen Baukörper bohren kann, **dadurch gekennzeichnet, daß**
ein Öffnungsabschnitt (15) im Kern des Schaftes (12) gebildet wird, der sich vom proximalen Endabschnitt des Schaftes (12) zum distalen Endabschnitt des Schaftes (12) über eine ausreichende Länge erstreckt, um einen Spreizstift (1) aufzunehmen, und ein Schlitz (16) sich von dem distalen Vorderende wenigstens bis zu dem Öffnungsabschnitt (15) erstreckt, wodurch der selbstbohrende Anker durch Einsetzen des Spreizstiftes (1) in den Öffnungsabschnitt (15) und Eintreiben des Spreizstiftes (1) bis zum Aufspreizen des Schlitzes (16) sicher an einem Baukörper befestigt werden kann,
ein Ausschnitt (23) im proximalen Endabschnitt der Bohrkrone (20 oder 31) gebildet wird, der sich etwa vom Mittelabschnitt bis zum proximalen Ende der Bohrkrone (20 oder 31) erstreckt, und
die Bohrkrone (20 oder 31) so in dem Schlitz (16) aufgenommen wird, **daß** sich der Ausschnitt (23) in Radialrichtung innerhalb des Schlitzes (16) befindet, wodurch der distale Endabschnitt des Spreizstiftes (1) in den Ausschnitt (23) eintreten kann.

2. Selbstbohrender Anker nach Anspruch 1, bei dem der Schaft (12) mit einer schraubenförmigen Nut (41) gebildet wird, um als Eingriffselement zu dienen, wenn der Schlitz (16) gespreizt ist.

3. Selbstbohrender Anker nach Anspruch 2, bei dem die schraubenförmige Nut (41) eine Vorderflanke (42) und eine Hinterflanke (43) aufweist und bei dem die Fläche der Hinterflanke (43) im wesentlichen senkrecht zur Achse des Schaftes (12) verläuft, wenn der Schlitz (16) gespreizt ist.

## Revendications

1. Ancrage autotaraudeur comprenant une queue (12) dont l'extrémité proximale peut être engagée dans un élément rotatif d'un outil, une encoche (16) étant formée dans la partie d'extrémité distale de la queue (12) et s'étendant à partir de sa pointe d'extrémité distale, pour recevoir un trépan de forage (20 ou 31) comportant des arêtes de coupe (28 ou 48) formées sur sa partie d'extrémité distale, ledit trépan de forage (20 ou 31) pouvant ainsi forer un trou de départ dans une structure par l'intermédiaire de la rotation de l'ancrage, **caractérisé en ce que**:
une partie d'ouverture (15) est formée dans le centre de la queue (12) s'étendant de la partie d'extrémité proximale de la queue (12) vers la partie d'extrémité distale de la queue (12), sur une longueur suffisante pour recevoir une goupille d'écartement (1), l'encoche (16) s'étendant de ladite pointe d'extrémité distale au moins vers ladite partie d'ouverture (15), l'ancrage autotaraudeur pouvant ainsi être fixé fermement à une structure par ajustement de la goupille d'écartement (1) dans la partie d'ouverture (15) et par enfoncement de la goupille d'écartement (1) jusqu'à ce que l'encoche (16) soit écartée;
une entaille (23) est formée dans la partie d'extrémité proximale du trépan de forage (20 ou 31) de sorte à s'étendre de sa partie pratiquement centrale en direction de l'extrémité proximale du trépan de forage (20 ou 31); et
le trépan de forage (20 ou 31) est reçu dans l'encoche (16), l'entaille (23) étant agencée radialement à l'intérieur de l'encoche (16), la partie d'extrémité distale de la goupille d'écartement (1) pouvant ainsi pénétrer dans l'entaille (23).

2. Ancrage autotaraudeur selon la revendication 1, dans lequel ladite queue (12) comporte une rainure hélicoïdale (4) destinée à faire fonction d'élément d'engagement lors de l'écartement de l'encoche (16).

3. Ancrage autotaraudeur selon la revendication 2, dans lequel ladite rainure hélicoïdale (4) comprend un flanc avant (42) et un flanc arrière (43), la face du flanc arrière (43) étant pratiquement perpendiculaire à l'axe de la queue (12) lors de l'écartement de l'encoche (16).
